# EUROPEAN PATENT SPECIFICATION

(11) **EP 0 890 920 B1**
(45) Date of publication and mention of the grant of the patent: **26.11.2003**
(21) Application number: 98202335.0
(22) Date of filing: 10.07.1998
(51) Int. Cl.: G06K 17/00, G06K 7/10

(54) **A registration system for registering data of products such as flowers, plants, vegetables and the like**
System zum Registrieren von Daten in Bezug auf Blumen, Pflanzen, Gemüse und Dergleichen
Système d'enregistrement de données relatives à des produits tels que fleurs, plantes. légumes et similaires

(30) Priority: 11.07.1997 NL 1006554
(43) Date of publication of application: 13.01.1999
(73) Proprietor: Jamafa Agricultural Machinery B.V., 6041 TE Roermond (NL)
(72) Inventor: Janssen, Sylvia Alexandra, 6049 GP Herten (NL); Van der Honing, Johannes Edward, 6049 GP Herten (NL)
(74) Representative: Dohmen, Johannes Maria Gerardus

(56) References cited:
- WO-A-96/21203
- FR-A- 2 321 689
- FR-A- 2 698 190

## Description

The invention relates to a registration system for registering data of products, comprising data means and registration means, wherein said data means comprise detachable data elements, and wherein said registration means comprise electronically controlled reading means and processing means, said reading means include at least one reading unit and a platform comprising one or more windows or recesses for receiving detachable data elements, wherein the or each reading unit and said platform are arranged in such a manner that said data elements received at one or more windows or recesses of the platform are successively read as a result of a relative movement of said platform and the or each reading unit.

In modern flower and plant nurseries and market gardens the harvesting and other operations are registered as much as possible in order to work as efficiently as possible and to achieve the highest possible production. For example, by detecting pests and diseases at an early stage, and controlling them, if necessary, wherein information with regard to the location of the products in question, among others, plays an important role.

In practice various electronic registration systems are being used. International patent application WO 96/21203 describes a registration system comprising a plurality of fixedly arranged reading devices, which are capable of reading data from detachable data elements, such as magnetic cards and chip cards carrying data associated with a respective product, operation and/or worker or operator. In addition to suitable input means for said magnetic cards and chip cards, further input means in the form of pushbuttons, a keyboard, etc. are provided for the registration by said operator of the data from the data elements and additional data.

In practice it has been proven that the operation of pushbuttons or the inputting of codes on a keyboard is highly error-prone. This is the case, in particular, with those systems wherein employees, among others, have to memorize the location code provided at the location of the products to be collected, and have to key-in said code at a remote registration system. The use of hand-held scanners, by means of which information in the form of bar codes has to be registered, for example, requires a certain skill, and said scanners are liable to damage. In particular in cases where products such as flowers, plants and vegetables are being handled, hand-held scanners are susceptible to fouling of the scanning part, with the ensuing risk of incorrect registrations.

Farmers and market gardeners frequently use the services of temporary workers, who are in some cases only hired or engaged for a few days. In those cases there is hardly any time to explain how to operate a registration system, and/or how to avoid errors. In situations such as these a registration system comprising a keyboard and/or a number of pushbuttons to be operated quickly leads to insurmountable problems, with inevitable incorrect registrations and all the drawbacks this involves.

French patent application nr. FR-A-2 321 689 discloses a centrifugal-analyser arrangement comprising registration means, which registration means comprises electronically controlled reading means for reading binary data formed by a plurality of coloured data elements, wherein each data element represents either a "0" or a "1" based on the colour of said element. Said data elements are placed in a plurality of recesses in the side of a rotary platform. Relative motion of the platform causes the reading means to register said coloured data elements, and the ordering of the elements determine a binary code representing said platform. In use the arrangement is connected to processing means.

French patent application nr. FR-A-2 698 190 discloses an automatic evaluation system for the processing of harvested fruit units (packages), comprising identification means using bar code labels attached to said units, means for automatic weighing said harvested units, means for processing the information acquired from identification and weighing of the units, said means comprising data processing software.

Accordingly, it is an object of the present invention to provide an improved registration system, wherein errors when said registration is being operated for registering data are excluded as much as possible.

This objective is accomplished with the registration system according to the invention in that said detachable data elements comprise data associated with products to be registered, said registration means comprise memory means, and wherein said reading means, processing means and memory means are arranged for reading, processing and storing data present on said detachable data elements.

The registration means of said registration system according to the invention, which comprise the platform for receiving the detachable data elements, allow a robust construction, whereby the operator only needs to place the respective data elements on or in the windows or recesses of the platform, after which the respective data are automatically processed, without any special know-how and skills of employees with regard to the relevant equipment or with regard to the registration procedure being required. This is advantageous in particular with employees who carry out (seasonal) work for only a limited period of time.

In a preferred embodiment of the invention, said platform is a rotatably arranged disc, comprising windows or recesses being distributed over its circumference. The reading unit and the rotatable disc are arranged in such a manner with respect to each other that detachable data elements placed on the disc can be successively read by the reading unit as a result of the rotation of the disc.

By placing the detachable data elements, for example in the form of square, rectangular or round labels, on the rotatable disc, it becomes possible to associatedly register all the information that is required for a modern processing of products in for example flower and plant nurseries and market gardens in a simple and reliable manner.

A quick and reliable operation can be guaranteed by coupling the rotatable disc with driving means, in such a manner that said rotatable disc, once it has been manually set in motion, will automatically be driven further by said driving means in order for the data to be read, whereby the disc is automatically stopped after the data have been read.

In another preferred embodiment of the invention, the data means consist of corresponding fixed and detachable data elements, wherein at least said detachable data elements may carry location data of a respective location, for example.

By fixedly disposing the fixed data elements at a position associated with the location of the products and likewise providing detachable location data elements at said position, which detachable location data elements can be taken along by an employee charged with the registration of the products in question to the registration means for automatically registering the data present on said detachable data elements, errors caused by incorrect memorisation of for example location codes are avoided, as well as the necessity of using hand-held scanners and the like, which are liable to malfunction.

In yet another preferred embodiment of the invention, the data means include correspondingly marked fixed and detachable data elements. This, in order to make it easier to place back the detachable data elements.

The data elements may be in the form of labels. By making the labels of a material which is resistant to impact and wear, for example a metal or a wear-resistant plastic, a wide range of applications can be provided, including those applications where the labels in question are subject to rough handling.

In yet another preferred embodiment of the invention at least the detachable labels are provided on one side with a bar code, and on the other side with a mark or code, if necessary, for example a serial number, which corresponds with the respective location.

It has been found that fixing the detachable labels by magnetic means is a solution which is very well feasible in practice. That is, the fixed labels are magnetized or provided with a magnetic material, and the detachable labels are made of a magnetizable material in order for said labels to be magnetically attached to said fixed labels. Of course it is also possible to use other fixation techniques, for example providing a detachable label with a suspension eye or opening and the like.

In order to provide a universal way of registering data, in a further embodiment of the invention, the registration system is provided with further data means including detachable further data elements, which carry one or more further data, such as data with regard to the type or kind of products, their quality, detected diseases, pests or other defects in the case of for example plants and vegetables, treatment data, identity data of the employee in question, etc.

In order to facilitate the use of said further data means, said further data means according to the invention include correspondingly marked fixed and detachable further data elements, wherein at least the detachable further data elements carry one or more further data. For example, by using the names of diseases and/or illustrations thereof as a corresponding mark, or by using pictograms and the like, a registration is provided which is easy to use for people who are not experts.

In order to be able to register both the location data and the further data in an efficient manner, using the same registration means, the respective further data are registered in or on the detachable further data elements in a similar manner as the location data are registered in or on the location data elements. Furthermore it is preferred for the further data elements to have a form or shape which corresponds with that of the location data elements and is adapted to the form or shape of the windows or recesses of the platform.

In particular it has been found that the use of different colours for said further data elements and said location data elements leads to a registration system which is simple to use for nonexpert, unskilled workers. The windows or recesses of the platform may advantageously be coloured in a corresponding manner for registering data from the data elements in a particular sequence, for example.

In order to prevent unnecessary running about, it is advantageous to dispose the fixed and/or the detachable further data elements according to the invention near or at the registration means. In that case the respective further data can be registered together with the location data in one operation.

Preferably the data are registered on one or more detachable memory cards, which can be read by a company computer for further processing of the data in question.

The invention furthermore provides a method for registering data of products such as flowers, plants, vegetables and the like from various locations by means of the registration system as described above, wherein the products are collected in a holder or container, which method comprises the steps of:
- detaching a detachable location data element from the respective location from which the products originate;
- registering location data of the respective location data element in said registration means;
- registering, at least in conjunction with the location data, further data in the form of operator or worker data, product data, treatment data, quality data and the like of the products in question; and
- attaching a memory card, on which the respective data are registered, to said holder or container.

The products in the container and one or more of the memory cards can then be processed at a further location, whereby it is possible to add additional information, if necessary, concerning the employee who carries out said further processing and the respective operations or actions.

The invention will be explained in more detail hereafter by means of a preferred embodiment of the registration system and its application in the harvesting of roses. It will be appreciated that the invention is not limited to the preferred embodiment which is described herein and/or to its application in rose nurseries.
Figure 1 is a schematic, perspective view of a preferred embodiment of registration means being part of a registration system according to the invention, which are arranged for automatically registering location data and further data of products such as flowers, plants, vegetables and the like.
Figure 2 schematically shows an embodiment of fixed and detachable location data elements in the form of correspondingly marked rectangular labels.
Figure 3 is a schematic, larger-scale view of an externally readable bar code provided on the detachable label, which bar code represents data about the respective location, the product, the processing, etc.
Figure 4 is a schematic, larger-scale view of the reading unit for reading or scanning the detachable data elements as used in the registration means according to Figure 1.

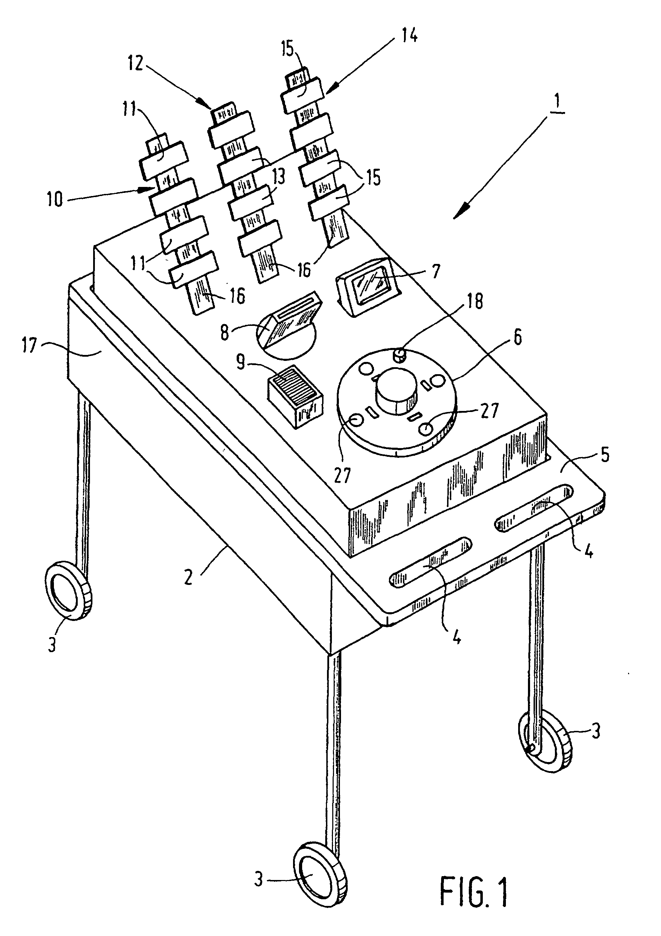

Figure 1 shows a preferred embodiment of registration means 1 being part of a registration system according to the invention. The registration means comprise a table or platform-shaped mobile chassis or frame 2, having wheels 3. The chassis 2 can be readily moved by means of grips 4.

Present on a work top 5 of the chassis 2 are a number of means for processing location data and/or further data relating to a product, an operation or an operator, including reading means 6 for reading data which are registered on detachable location data elements, and optional display device 7, for example for displaying data relating to the registration procedure, memory means 8 for registering location data and/or further data on memory cards 9, and detachable further data elements carrying data relating to a respective product, operation and/or operator or employee.

The detachable further data elements may comprise a first series of labels 10, the individual labels 11 of which include information which relates to starting, stopping and interval activities of product-related operations, for example the harvesting of roses from rosebushes which are arranged in side-by-side relationship in rows, with paths extending between said rows, via which the roses can be reached. A second series of labels 12 may consist of labels 13, which carry information about diseases associated with the roses in question, such as thrips, mite, etc. A possible third series of detachable further data elements 14 may comprise a number of labels 15, which each carry different information with respect to the operations connected with the product in question, such as cutting, disbudding, etc.

The labels 11, 13 and 15 are preferably detachably attached to carriers or supports 16 by magnetic means, whereby the carriers or supports 16 comprise magnets, and whereby the labels 11, 13 and 15 are made of a magnetic material.

The reading means 6, the display device 7 and the memory means 8 are connected to processing means (not shown) in the form of a micro-computer and energy supply means, such as a battery and the like, which are disposed in the housing 17 of the chassis 2.

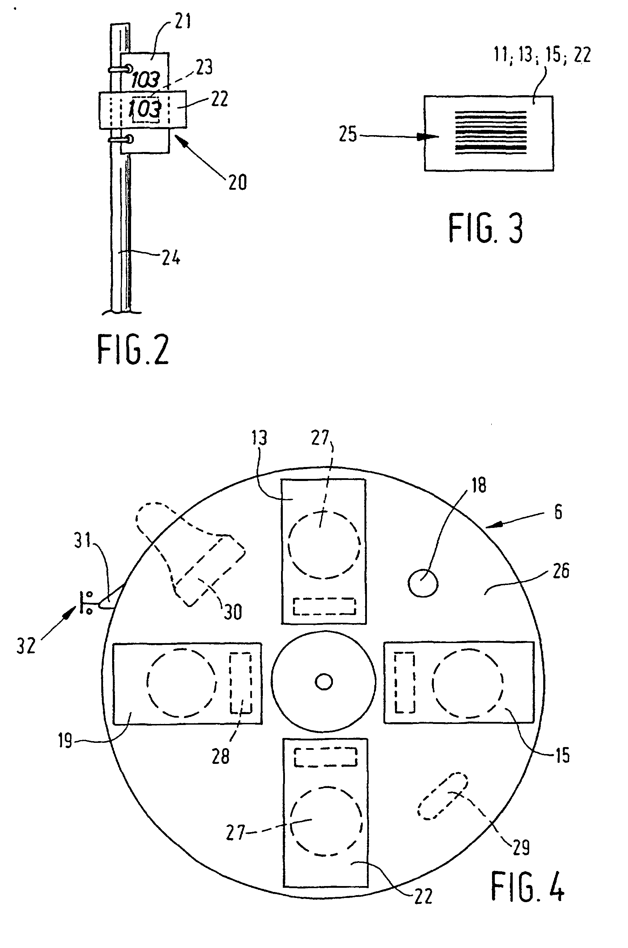

Figure 2 shows a preferred embodiment of location data means 20 in the form of a fixed location data element 21 and a detachable location data element 22. In the embodiment shown, the fixed location data element 21 is attached to a pole 24, and the detachable location data element 22 consists of a rectangular label having the same shape and dimensions as the labels 11, 13 and 15 (Figure 1). Preferably the detachable labels 22 are magnetically attached to the fixed labels 21 by magnetic means. The possibility of data being erased from magnetic cards and the like by magnetic means which may be present in the detachable labels 22 is ruled out by making the fixed labels 21 of a magnetized material or providing them with magnetic elements, and making the detachable labels 22 of a magnetizable material.

As can be seen in Figure 2, the fixed and detachable labels 21, 22 are marked correspondingly, in this example by means of a serial number. Said serial number corresponds with the location of the products, for example the location number which corresponds with one row or with a number of rows of rosebushes. It will be appreciated that any other type of marking may be used for this purpose, for example a colour marking or a symbol, pictograms, photos or other illustrations which uniquely characterise a pair of detachable and fixed labels 21, 22.

It will be apparent that labels 11, 13 and 15 may be similarly provided with a marking or text or code, for example in the form of a fixed label, which corresponds with a respective series of labels 10, 12, 14 and/or with the position on the associated carrier or support 16.

Figure 3 shows a label 11, 13, 15 or 22, whereby the information which the label, or generally the respective detachable data element, carries in the form of a bar code 25, is externally readable.

In their most well-known form bar codes consist of a number of parallel bars of varying thickness, which may be spaced at varying distances from each other, whereby the data in question are contained in the sequence of the bars and/or in the distances between said bars.

Figure 4 is a larger-scale view of the reading means 6 (Figure 1) for reading information registered on the detachable data elements.

In the preferred embodiment of the invention, the reading means 6 comprise a rotatably arranged platform in the form of a disc 26 comprising one or more recesses or windows 27. The disk area surrounding the windows 27 is arranged for positioning a label 11, 13, 15 or 22. Said arrangement may for example comprise magnetic means 28 or a recess having suitable dimensions for receiving labels 11, 13, 15 and 22. In the illustrated embodiment the disc 26 comprises four recesses or windows 27 for successively receiving a label 19 carrying identity data (for example the name) of the person who registers the data, a label 22 carrying location data, a label 15 carrying data on the nature of the operations, and a label 13 containing information about any diseases that may have been detected.

The various labels 11, 13, 15 and 22 can be provided with different colours, for example white in the case of location labels 22, green in the case of labels relating to diseases, operations to be carried out and the like, and yellow for registering personal data, with correspondingly coloured recesses or windows 27 of the disc 26. This makes it clear to unskilled workers which labels are to be placed on the disc, and possibly in what sequence. Of course a number of recesses or windows may have the same colour.

The disc 26 comprises a knob or pushbutton 18 projecting upwards from the plane thereof, which is used for manually setting the disc 26 in motion. When the disc 26 is rotated, the labels placed in front of the windows 27 are successively moved past scanning means 30, which are arranged in such a manner with respect to the rotatable disc 26 in the chassis 17 that a bar code 25 present on a label can be read. Scanning devices or optical scanners suitable for this purpose are known per se in practice.

In order to enable a quick and efficient registration, the disc 26 is automatically driven by driving means in the form of a driving motor. Reference numeral 29 indicates a driving wheel engaging the disc 26, which is accommodated, together with an associated driving motor (not shown) in the housing 17 of the chassis 2 (Figure 1). The driving motor is controlled in such a manner that when the disc 26 is manually set in motion by means of the button 18, said movement is taken over by the driving means, and the disc will automatically make one or more revolutions.

In the case that only four labels need to be read, one revolution of the disc 26 will suffice. It is also possible, however, to read more than four labels containing data, so that the disc 26 will have to make more than one revolution.

The disc 26 is provided with a cam 31 for counting the number of revolutions, which cam operates a switch 32 for turning off the drive of the disc 26 in dependence of the (programmed) number of revolutions.

Those skilled in the art will appreciate that other suitable switching and/or detection means than a cam 31 and a switch 32 are conceivable, such as detection by means of Hall generators, optical means and the like, which are capable of producing a signal for stopping a rotating disc 26.

In practice the registration system according to the invention may, for example, be used as follows, whereby the harvesting of roses is taken as an example again.

As already noted, the rosebushes in rose nurseries grow side by side in rows, whereby each row is provided with a fixed label 21 and with a detachable label 22. Said labels are preferably made of a wear-resistant materi al , such as steel, or of a wear-resi stant plastic, so that they will be capable of withstanding rough handling.

The roses in a row which are suitable for processing are "harvested" by the employees and collected in a holder or container. As soon as a container is full, it is moved out of the path between the rows of roses, whereby the detachable label 22 containing the location information in question is carried along in passing to the registration means 1 as shown in Figure 1. Said registration means may be disposed at a strategic location, in such a manner that they can be used by several employees at a time.

Each employee furthermore possesses a personal label 19 made out in his name.

The employee places his personal label 19 with the bar code facing down on the window 27 of the disc 26 of the registration means 1. Then the label 22 carrying the location information is placed on another window 27, and subsequently the labels 13 and/or 15 carrying information about any diseases that may have been detected of the roses of the respective location or row and about the work that has been done. A label 11 carrying starting, stopping and interval data may be placed on a window 27 of the disc 26, if necessary, so that a time registration of the respective operations can be made in cooperation with time control means which are present in the processing means.

The data which are read from the label are registered on a memory card 9, for example in the form of an electronic chip card, which is inserted into memory means 8. That is, the data being read are registered on a respective memory card 9 with the addition of time and date information, if desired.

Said memory card 9 and the information electronically provided thereon is now hung on the rose container in question. The employee removes his own name label 19 and the other labels from the disc 26 and places them back on the supports 16 or at the respective location upon going to the next row of roses to be harvested. The process is then repeated.

Then the (full) rose containers and the memory cards attached thereto are graded, for example to length and quality, in a further operation so as to form rose bunches.

The roses are for example manually suspended with their buds from carriers on machines which are known for this purpose, and carried through the machine so as to be cut, etc.

The machines in question are provided with reading devices for the memory cards. The memory cards on which the location data and other product data are registered are inserted into the reading device in question, so that the processing machine can derive information therefrom with regard to the operations to be carried out on the roses in question. Also the identity of the employee in question can be registered thereby, as well as the point in time and the like. Any grading data are registered thereby as well.

The information thus read is stored in a company computer for further analysis.

Although the invention has been disclosed on the basis of its application in the harvesting of roses, with information being registered in the form of a bar code, it will be understood that the invention is not limited to such an application and to such a method of registering information.

The invention may in fact be used for registering a large number of different products, possibly in combination with detachable information elements or labels of a different type which are, for example, provided with bar codes, with electromagnetically readable information carriers and the like. Furthermore it is not necessary to use fixed and detachable, correspondingly marked pairs of labels. The locations may for example be defined implicitly (such as by their sequence), so that it will suffice to use detachable location data elements.

Those skilled in the art will furthermore appreciate that the relative movement between rotatable disc 26 and the scanning means 30 may also be effected in that the scanning means 30 are rotatably disposed and the disc 26 is fixedly disposed. For reasons of reliability, a rotatable disc 26 is to be preferred. Instead of using a rotating movement, it is also possible, of course, to use a translating or reciprocating platform or scanning means, provided with recesses for the detachable data elements in question.

The processing means incorporated in the registration means 1 according to the invention, such as a microprocessor or a microcomputer, are preferably also arranged for performing a number of checking tasks. In this connection, the checking of the correctness of the memory cards 9 may be considered, which functions to prevent data being registered on a memory card which is not intended or approved for that purpose, checking for date fields and/or time fields, which functions to prevent memory cards being used more than once a day or to prevent memory cards that have not been processed yet from being overwritten, etc. All this is done to rule out the occurrence of errors and incorrect registrations as much as possible.

## Claims

1. A registration system for registering data of products, comprising data means (10, 12, 14, 20) and registration means (1), wherein said data means (10, 12, 14, 20) comprise detachable data elements (11, 13, 15, 22), and wherein said registration means (1) comprise electronically controlled reading means (6) and processing means, said reading means (6) include at least one reading unit (30) and a platform (26), the platform comprising one or more windows or recesses (27) for receiving said detachable data elements (11, 13, 15, 22), wherein the or each reading unit (30) and said platform (26) are arranged in such a manner that said data elements (11, 13, 15, 22) received at one or more windows or recesses (27) of the platform (26) are successively read as a result of a relative movement of said platform (26) and the or each reading unit (30), the registration system **characterized in that** said detachable data elements (11, 13, 15, 22) comprise data associated with products to be registered, said registration means (1) comprise memory means (8), and **in that** said reading means (6), said processing means and said memory means (8) are respectively arranged for reading, processing and storing said data present on said detachable data elements (11, 13, 15, 22).

2. A registration system according to claim 1, wherein said platform (26) is a rotatably arranged disc (26) comprising windows or recesses (27) distributed over its circumference.

3. A registration system according to claim 2, comprising driving means coupled with said rotatable disc (26), which driving means are arranged in such a manner that said rotatable disc (26), once it has been manually set in motion, will automatically be driven further by said driving means in order for the data to be read, and that said disc is automatically stopped after the data have been read.

4. A registration system according to any of the preceding claims, wherein said data means (10, 12, 14, 20) include corresponding fixed (21) and detachable data elements (11, 13, 15, 22).

5. A registration system according to claim 4, wherein said fixed data elements (21) are fixedly disposed at a position associated with the location of the products, and wherein said detachable data elements (11, 13, 15, 22) are detachably provided at said position.

6. A registration system according to claim 5, wherein said fixed (21) and detachable data elements (22) associated with a respective location are correspondingly marked location data elements, which carry location data of said respective location of products.

7. A registration system according to one or more of the preceding claims, wherein said data means (10, 12, 14, 20) comprise corresponding fixed and detachable further data elements (11, 13, 15), which carry one or more further data.

8. A registration system according to claim 7, wherein said fixed further data elements are fixedly provided near said registration means (1) and wherein said detachable further data elements (11, 13, 15) are detachably provided near said registration means (1).

9. A registration system according to claim 7 or 8, wherein said data from said data elements (22) and said further data from said further data elements (11, 12, 15) are registered in a similar manner, for example in the form of bar codes.

10. A registration system according to claims 6 and 7, 8 or 9, wherein said reading means (6), said processing means and said memory means (8) are arranged for reading, processing and registering further data from said detachable further data elements (11, 13, 15) in conjunction with said location data from said detachable location data elements (22).

11. A registration system according to one or more of the claims 4 - 10, wherein said detachable data elements (22) and said detachable further data elements (11, 13, 15) are shaped in conformity with said windows or recesses (27) of said platform (26) in order to be received therein.

12. A registration system according to one or more of the preceding claims, wherein said data elements have the form of fixed (21) and detachable labels (11, 13, 15, 22), wherein said detachable labels are preferably made of a material which is resistant to impact and wear, such as a metal.

13. A registration system according to claim 12, wherein corresponding fixed (21) and detachable labels (11, 13, 15, 22), in particular the fixed (21) and the detachable labels (22) of location data elements, are marked by means of a corresponding serial number.

14. A registration system according to one or more of the preceding claims, wherein said memory means (8) comprise a detachable memory card (9).

15. A registration system according to claim 14, comprising a company computer provided with means for reading memory cards (9) for processing by said company computer of data which are registered on a memory card (9), if applicable in conjunction with further data relating to the product and/or the processing thereof.

16. A method for registering data of products such as flowers, plants, vegetables and the like from various locations by means of a registration system according to one or more of the claims 1 - 15, wherein said products are collected in a holder or container,
**characterized by** the steps of:
- detaching a detachable location data element from the respective location from which the products originate;
- registering location data of the respective location data element in said registration means (1);
- registering, at least in conjunction with the location data, further data in the form of operator or worker data, product data, treatment data, quality data and the like of the products in question; and
- attaching a memory card, on which the respective data are registered, to said holder or container.

17. A method according to claim 16, further comprising the steps of:
- registering in a company computer, via a reading unit for memory cards, data stored in the memory card in conjunction with additional data, among which operator data.

## Patentansprüche

1. Ein Registrierungssystem zur Registrierung von Produktdaten, umfassend eine Dateneinrichtung (10, 12, 14, 20) und eine Registrierungseinrichtung (1), wobei die Dateneinrichtung (10, 12, 14, 20) lösbare Datenelemente (11, 13, 15, 22) umfasst und wobei die Registrierungseinrichtung (1) eine elektronisch gesteuerte Leseeinrichtung (6) und eine Verarbeitungseinrichtung umfasst, wobei die Leseeinrichtung (6) mindestens eine Leseeinheit (30) und eine Plattform (26) aufweist, wobei die Plattform eine oder mehrere Fenster oder Aussparungen (27) zur Aufnahme der lösbaren Datenelemente (11, 13, 15, 22) umfasst, wobei die oder jede Leseeinheit (30) und die Plattform (26) in einer Weise angeordnet sind, dass die Datenelemente (11, 13, 15, 22), welche in einem oder mehreren Fenstern oder Aussparungen (27) der Plattform (26) aufgenommen sind, sukzessive gelesen werden als Ergebnis einer Relativbewegung der Plattform (26) und der oder jeder Leseeinheit (30), wobei das Registrierungssystem **dadurch gekennzeichnet ist, dass** die lösbaren Datenelemente (11, 13, 15, 22) den zu registrierenden Produkten zugeordnete Daten umfassen, wobei die Registrierungseinrichtung (1) eine Speichereinrichtung (8) umfasst, und dass die Leseeinrichtung (6), die Verarbeitungseinrichtung und die Speichereinrichtung (8) entsprechend zum Lesen, Verarbeiten und Speichern der auf den lösbaren Datenelementen (11, 13, 15, 22) vorhandenen Daten angeordnet sind.

2. Ein Registrierungssystem gemäß Anspruch 1, wobei die Plattform (26) eine drehbar angeordnete Scheibe (26) ist, welche über ihren Umfang verteilte Fenster oder Aussparungen (27) umfasst.

3. Ein Registrierungssystem gemäß Anspruch 2, umfassend eine Antriebseinrichtung, die mit der drehbaren Scheibe (26) gekoppelt ist, wobei die Antriebseinrichtung in einer Weise angeordnet ist, dass die drehbare Scheibe (26), nachdem sie manuell in Bewegung gesetzt worden ist, durch die Antriebseinrichtung automatisch zum Lesen der Daten weiter betrieben wird und dass die Scheibe automatisch gestoppt wird, nachdem die Daten gelesen worden sind.

4. Ein Registrierungssystem gemäß einem der voranstehenden Ansprüche, wobei die Dateneinrichtung (10, 12,14,20) zugehörige befestigte (21) und lösbare Datenetemente (11, 13, 15, 22) aufweist.

5. Ein Registrierungssystem gemäß Anspruch 4, wobei die befestigten Datenelemente (21) an einer dem Ort des Produkts zugeordneten Position fest angeordnet sind und wobei die lösbaren Datenelemente (11, 13, 15, 22) an dieser Position lösbar vorgesehen sind.

6. Ein Registrierungssystem gemäß Anspruch 5, wobei die befestigten (21) und lösbaren Datenelemente (22), welche einem entsprechenden Ort zugeordnet sind, entsprechend markierte Ortsdatenelemente sind, welche Ortsdaten des entsprechenden Orts des Produkts tragen.

7. Ein Registrierungssystem gemäß einem oder mehreren der voranstehenden Ansprüche, wobei die Dateneinrichtung (10, 12, 14, 20) entsprechende befestigte und lösbare weitere Datenelemente (11, 13, 15) umfasst, die ein oder mehrere weitere Daten tragen.

8. Ein Registrierungssystem gemäß Anspruch 7, wobei die befestigten weiteren Datenelemente nahe der Registrierungseinrichtung (1) fest vorgesehen sind und wobei die lösbaren weiteren Datenelemente (11, 13, 15) nahe der Registrierungseinrichtung (1) lösbar vorgesehen sind.

9. Ein Registrierungssystem gemäß Anspruch 7 oder 8, wobei die Daten von den Datenelementen (22) und die weiteren Daten von den weiteren Datenelementen (11, 12, 15) auf ähnliche Weise registriert sind, beispielsweise in Form von Balkencoden.

10. Ein Registrierungssystem gemäß Anspruch 6 und 7, 8 oder 9, wobei die Leseeinrichtung (6) die Verarbeitungseinrichtung und die Speichereinrichtung (8) angeordnet sind zum Lesen, Verarbeiten und Registrieren weiterer Daten von den lösbaren weiteren Datenelementen (11, 13, 15) in Verbindung mit den Ortsdaten von den lösbaren Ortsdatenelementen (22).

11. Ein Registrierungssystem gemäß einem oder mehreren der Ansprüche 4 bis 10, wobei die lösbaren Datenelemente (22) und die lösbaren weiteren Datenelemente (11, 13, 15) in Übereinstimmung mit den Fenstern oder Aussparungen (27) der Plattform (26) geformt sind, um darin aufgenommen zu werden.

12. Ein Registrierungssystem gemäß einem oder mehreren der voranstehenden Ansprüche, wobei die Datenelemente die Form von befestigten (21) und lösbaren Labels (11, 13, 15, 22) haben, wobei die lösbaren Labels vorzugsweise aus einem Material bestehen, welches schlag- und verschleißfest ist, wie beispielsweise ein Metall.

13. Ein Registrierungssystem gemäß Anspruch 12, wobei entsprechende befestigte (21) und lösbare Labels (11, 13, 15, 22), insbesondere die befestigten (21) und die lösbaren Labels (22) von Ortsdatenelementen, mittels einer entsprechenden Seriennummer markiert sind.

14. Ein Registrierungssystem gemäß einem oder mehreren der voranstehenden Ansprüche, wobei die Speichereinrichtung (8) eine lösbare Speicherkarte (9) umfasst.

15. Ein Registrierungssystem gemäß Anspruch 14, umfassend einen Unternehmenscomputer, der mit einer Einrichtung zum Lesen von Speicherkarten (9) zum Verarbeiten von Daten, welche auf einer Speicherkarte (9) registriert sind, ausgestattet ist durch den Unternehmenscomputer, soweit zutreffend in Verbindung mit weiteren Daten, die das Produkt und/oder die Verarbeitung desselben betreffen.

16. Ein Verfahren zur Datenregistrierung von Produkten, wie beispielsweise Blumen, Pflanzen, Gemüse und dergleichen, von unterschiedlichen Orten mittels eines Registrierungssystems gemäß einem der Ansprüche 1 bis 15, wobei die Produkte in einem Halter oder Behälter gesammelt sind, **gekennzeichnet durch** die Schritte:
- Lösen eines lösbaren Ortsdatenelements des entsprechenden Orts von dem die Produkte stammen;
- Registrieren von Ortsdaten des entsprechenden Ortsdatenelements in der Registrierungseinrichtung (1);
- Registrieren, zumindest in Verbindung mit den Ortsdaten, weiterer Daten in Form von Bediener- oder Arbeiterdaten, Produktdaten, Behandlungsdaten, Qualitätsdaten und dergleichen des fraglichen Produkts; und
- Anbringen einer Speicherkarte, auf welcher die entsprechenden Daten registriert sind, an dem Halter oder Behälter.

17. Ein Verfahren gemäß Anspruch 16, des weiteren umfassend die Schritte:
- Registrieren in einem Unternehmenscomputer, mittels einer Leseeinheit für Speicherkarten, von Daten, die in der Speicherkarte in Verbindung mit zusätzlichen Daten gespeichert sind, unter denen Bedienerdaten sind.

## Revendications

1. Système d'enregistrement pour enregistrer des données de produits, comprenant des moyens de données (10, 12, 14, 20) et des moyens d'enregistrement (1), dans lequel lesdits moyens de données (10, 12, 14, 20) comprennent des éléments de données détachables (11, 13, 15, 22), et dans lequel lesdits moyens d'enregistrement (1) comprennent des moyens de lecture (6) et des moyens de traitement à commande électronique, lesdits moyens de lecture (6) comprennent au moins une unité de lecture (30) et une plate-forme (26), la plate-forme comportant une ou plusieurs fenêtres ou cavités (27) pour recevoir lesdits éléments de données détachables (11, 13, 15, 22), dans lequel la ou chaque unité de lecture (30) et ladite plate-forme (26) sont agencées d'une manière telle que lesdits éléments de données (11, 13, 15, 22) reçus à une ou plusieurs fenêtres ou cavités (27) de la plate-forme (26) sont lus successivement par suite d'un mouvement relatif de ladite plate-forme (26) et de la ou chaque unité de lecture (30), le système d'enregistrement étant **caractérisé en ce que** lesdits éléments de données détachables (11, 13, 15, 22) comprennent des données associées à des produits devant être enregistrés, lesdits moyens d'enregistrement (1) comprennent des moyens à mémoire (8), et **en ce que** lesdits moyens de lecture (6), lesdits moyens de traitement et lesdits moyens à mémoire (8), respectivement, sont agencés pour lire, traiter et stocker lesdites données présentes sur lesdits éléments de données détachables (11, 13, 15, 22).

2. Système d'enregistrement selon la revendication 1, dans lequel ladite plate-forme (26) est un disque (26) agencé de façon à pouvoir tourner, comportant des fenêtres ou cavités (27) réparties sur sa circonférence.

3. Système d'enregistrement selon la revendication 2, comportant des moyens d'entraînement accouplés audit disque (26) pouvant tourner, lesquels moyens d'entraînement sont agencés d'une manière telle que ledit disque (26) pouvant tourner, une fois qu'il a été mis manuellement en mouvement, continue d'être entraîné automatiquement par lesdits moyens d'entraînement pour que les données soient lues, et en ce que ledit disque est arrêté automatiquement après que les données ont été lues.

4. Système d'enregistrement selon l'une quelconque des revendications précédentes, dans lequel lesdits moyens de données (10, 12, 14, 20) comprennent des éléments de données correspondants fixes (21) et détachables (11, 13, 15, 22).

5. Système d'enregistrement selon la revendication 4, dans lequel lesdits éléments de données fixes (21) sont disposés fixement dans une position associée à l'emplacement des produits, et dans lequel lesdits éléments de données détachables (11, 13, 15, 22) sont prévus de façon détachable dans ladite position.

6. Système d'enregistrement selon la revendication 5, dans lequel lesdits éléments de données fixes (21) et détachables (22) associés à un emplacement respectifs sont des éléments de données d'emplacement marqués de façon correspondante, qui portent des données d'emplacement dudit emplacement respectif de produits.

7. Système d'enregistrement selon une ou plusieurs des revendications précédentes, dans lequel lesdits moyens de données (10, 12, 14, 20) comprennent d'autres éléments de données correspondants fixes et détachables (11, 13, 15) qui portent une ou plusieurs autres données.

8. Système d'enregistrement selon la revendication 7, dans lequel lesdits autres éléments de données fixes sont prévus fixement à proximité desdits moyens d'enregistrement (1) et dans lequel lesdits autres éléments de données détachables (11, 13, 15) sont prévus de façon détachable à proximité desdits moyens d'enregistrement (1).

9. Système d'enregistrement selon la revendication 7 ou 8, dans lequel lesdites données provenant desdits éléments de données (22) et lesdites autres données provenant desdits autres éléments de données (11, 12, 15) sont enregistrées d'une manière similaire, par exemple sous la forme de codes à barres.

10. Système d'enregistrement selon les revendications 6 et 7, 8 ou 9, dans lequel lesdits moyens de lecture (6), lesdits moyens de traitement et lesdits moyens à mémoire (8) sont agencés pour la lecture, le traitement et l'enregistrement d'autres données provenant desdits autres éléments de données détachables (11, 13, 15) conjointement avec lesdites données d'emplacement provenant desdits éléments de données d'emplacement détachables (22).

11. Système d'enregistrement selon une ou plusieurs des revendications 4 à 10, dans lequel lesdits éléments de données détachables (22) et lesdits autres éléments de données détachables (11, 13, 15) sont configurés en conformité avec lesdites fenêtres ou cavités (27) de ladite plate-forme (26) afin d'y être reçus.

12. Système d'enregistrement selon une ou plusieurs des revendications précédentes, dans lequel lesdits éléments de données ont la forme d'étiquettes fixes (21) et détachables (11, 13, 15, 22), dans lequel lesdites étiquettes détachables sont avantageusement formées d'une matière qui résiste aux chocs et à l'usure, tel qu'un métal.

13. Système d'enregistrement selon la revendication 12, dans lequel des étiquettes correspondantes fixes (21) et détachables (11, 13, 15, 22), en particulier les étiquettes fixes (21) et détachables (22) d'éléments de données d'emplacement, sont marquées au moyen d'un numéro de série correspondant.

14. Système d'enregistrement selon une ou plusieurs des revendications précédentes, dans lequel lesdits moyens à mémoire (8) comprennent une carte à mémoire amovible (9).

15. Système d'enregistrement selon la revendication 14, comportant un ordinateur de société pourvu de moyens pour la lecture de cartes à mémoire (9) en vue d'un traitement par ledit ordinateur de société de données qui sont enregistrées sur une carte à mémoire (9), si elles sont applicables conjointement avec d'autres données concernant le produit et/ou son traitement.

16. Procédé pour enregistrer des données de produits telles que des fleurs, des plantes, des légumes et analogues à partir de divers emplacements au moyen d'un système d'enregistrement selon une ou plusieurs des revendications 1 à 15, dans lequel lesdits produits sont collectés dans un support ou un conteneur, **caractérisé par** les étapes qui consistent :
- à détacher un élément de donnée d'emplacement détachable de l'emplacement respectif d'où proviennent les produits ;
- à enregistrer des données d'emplacement de l'élément de donnée d'emplacement respectif dans lesdits moyens d'enregistrement (1) ;
- à enregistrer, au moins conjointement avec les données d'emplacement, d'autres données sous la forme de données d'opérateur ou d'employé, de données de produit, de données de traitement, de données de qualité et analogues des produits en question ;
- à attacher une carte à mémoire, sur laquelle les données respectives sont enregistrées, audit support ou conteneur.

17. Procédé selon la revendication 16, comprenant en outre l'étape qui consiste :
- à enregistrer dans un ordinateur de société, par l'intermédiaire d'une unité de lecture pour des cartes à mémoire, des données stockées dans la carte à mémoire conjointement avec des données additionnelles, parmi lesquelles des données d'opérateur.
